# EUROPEAN PATENT APPLICATION

(11) **EP 4 825 916 A1**
(43) Date of publication of application: **21.10.2026**
(21) Application number: 24903465.3
(22) Date of filing: 22.11.2024
(51) Int. Cl.: C08L 33/04, C08J 3/215, C08J 11/12, C08L 71/02

(54) **RESIN COMPOSITION, MOLDED BODY, METHOD FOR PRODUCING RESIN COMPOSITION PELLETS, METHOD FOR PRODUCING RESIN COMPOSITION, METHOD FOR DECOMPOSING AND RECOVERING RESIN COMPOSITION, AND METHOD FOR PRODUCING RECYCLED MATERIAL**

(30) Priority: 15.12.2023 JP 2023212158; 12.11.2024 JP 2024197540
(71) Applicant: SUMITOMO CHEMICAL COMPANY, LIMITED, Tokyo 103-6020 (JP)
(72) Inventor: KONISHI, Shota, Niihama-shi, Ehime 792-8521 (JP)
(74) Representative: Vossius & Partner Patentanwälte Rechtsanwälte mbB
(86) International application number: PCT/JP2024/041438
(87) International publication number: WO 2025/126806

(57) **Abstract**

Provided are a resin composition from which a molded article having excellent transparency and relatively excellent chipping resistance can be obtained, a molded article, a method for producing resin composition pellets, a method for producing a resin composition, a method for decomposing and recovering a resin composition, and a method for producing a recycled material.

## Description

### TECHNICAL FIELD

The present invention relates to a resin composition, a molded article, a method for producing resin composition pellets, a method for producing a resin composition, a method for decomposing and recovering a resin composition, and a method for producing a recycled material.

### BACKGROUND ART

High transparency is required for vehicle exterior materials such as vehicle lamp covers. Particularly, in recent years, with the advent of vehicle lamps incorporating sensors, vehicle lamp covers and the like that are capable of exhibiting even greater transparency have been required.

Acrylic resins have been studied for use as vehicle exterior materials because of their high transparency. For example, Patent Document 1 discloses an acrylic resin composition containing an acrylic resin that is commonly used and polyethylene glycol having a molecular weight of 2,000 to 5,000.

### PRIOR ART DOCUMENT

### PATENT DOCUMENT

Patent Document 1: JP-A-2019-81850

### SUMMARY OF THE INVENTION

### PROBLEMS TO BE SOLVED BY THE INVENTION

Vehicle lamp covers and the like, which are vehicle exterior materials, are required to have excellent chipping resistance since scuff marks, scratches, and the like may be caused by flying stones and the like (chipping). However, a molded article containing the acrylic resin composition described in Patent Document 1 has a problem in that chipping resistance is poor. It should be noted that excellent transparency and chipping resistance may also be required in applications other than vehicle exterior materials.

The present invention has been made in view of such circumstances, and an object thereof is to provide a resin composition from which a molded article having excellent transparency and relatively excellent chipping resistance can be obtained, a molded article, a method for producing resin composition pellets, a method for producing a resin composition, a method for decomposing and recovering a resin composition, and a method for producing a recycled material.

### MEANS FOR SOLVING THE PROBLEMS

A resin composition according to the present invention is
a resin composition containing a (meth)acrylic resin (A) and polyethylene oxide (B),
in which
a content of the (meth)acrylic resin (A) is 75 parts by mass or more and less than 95 parts by mass based on 100 parts by mass of the resin composition,
a content of the polyethylene oxide (B) is more than 5 parts by mass and 25 parts by mass or less based on 100 parts by mass of the resin composition, and
a reduced viscosity (I) of the polyethylene oxide (B) represented by Formula (1) below is 2.00 dL/g or more and 25.00 dL/g or less: $I = \left(η-{η}_{0}\right) / \left({cη}_{0}\right)$ (1)
in the formula,
   η₀ represents a viscosity (Pa·s) of chloroform at 23°C as measured in accordance with JIS Z8803,
   η represents a viscosity (Pa·s) of a chloroform solution of the polyethylene oxide (B) at 23°C as measured in accordance with JIS Z8803, the solution having a concentration of 0.01 g/dL, and
   c represents the concentration (0.01 g/dL) of the polyethylene oxide (B).

A resin composition according to the present invention is
a resin composition containing a (meth)acrylic resin (A) and polyethylene oxide (B),
in which
a content of the (meth)acrylic resin (A) is 95 parts by mass or more and less than 97.5 parts by mass based on 100 parts by mass of the resin composition,
a content of the polyethylene oxide (B) is more than 2.5 parts by mass and 5 parts by mass or less based on 100 parts by mass of the resin composition,
the (meth)acrylic resin (A) is a methacrylic copolymer containing:
   a monomer unit derived from an alkyl methacrylate having an alkyl group having 1 to 4 carbon atoms, and
   a monomer unit derived from methacrylic acid, and
a reduced viscosity (I) of the polyethylene oxide (B) represented by Formula (1) bellow is 2.00 dL/g or more and 25.00 dL/g or less: $I = \left(η-{η}_{0}\right) / \left({cη}_{0}\right)$ (1)
in the formula,
   η₀ represents a viscosity (Pa·s) of chloroform at 23°C as measured in accordance with JIS Z8803,
   η represents a viscosity (Pa·s) of a chloroform solution of the polyethylene oxide (B) at 23°C as measured in accordance with JIS Z8803, the solution having a concentration of 0.01 g/dL, and
   c represents the concentration (0.01 g/dL) of the polyethylene oxide (B).

A molded article according to the present invention contains
the above-described resin composition.

A method for producing resin composition pellets according to the present invention includes
a pelletizing step of extruding the above-described resin composition with an extruder to obtain resin composition pellets.

A method for producing a resin composition according to the present invention is
a method for producing the above-described resin composition, the method including:
a kneading step of melt-kneading the (meth)acrylic resin (A) and the polyethylene oxide (B) with an extruder,
in which
the extruder includes a cylinder, and
a heater set temperature of the cylinder located closest to a portion where the polyethylene oxide (B) is fed and positioned downstream from the portion is 110°C or higher and 150°C or lower.

A method for decomposing and recovering a resin composition according to the present invention includes:
a decomposition step of decomposing the above-described resin composition at a temperature of 380°C or higher;
a separation step of separating a volatile component and a solid material generated by the decomposition step; and
a recovery step of recovering a (meth)acrylic acid ester from the volatile component.

A method for producing a recycled material according to the present invention includes:
a step of melt-kneading a raw material containing a crushed material obtained by crushing the above-described molded article,
in which a content of the crushed material is 0.01 parts by mass or more and 99.99 parts by mass or less based on 100 parts by mass of the raw material.

### EFFECT OF THE INVENTION

According to the present invention, there are provided a resin composition from which a molded article having excellent transparency and relatively excellent chipping resistance can be obtained, a molded article, a method for producing resin composition pellets, a method for producing a resin composition, a method for decomposing and recovering a resin composition, and a method for producing a recycled material.

### MODE FOR CARRYING OUT THE INVENTION

Hereinafter, embodiments of the present invention will be described, but the present invention is not limited to the following embodiments.

### [Resin Composition]

### <First Invention>

Hereinafter, an embodiment of a resin composition according to a first invention (hereinafter, referred to as a first embodiment) will be described.

The resin composition according to the first embodiment contains a (meth)acrylic resin (A) and polyethylene oxide (B), in which a content of the (meth)acrylic resin (A) is 75 parts by mass or more and less than 95 parts by mass based on 100 parts by mass of the resin composition, and a content of the polyethylene oxide (B) is more than 5 parts by mass and 25 parts by mass or less based on 100 parts by mass of the resin composition.

The (meth)acrylic resin (A) contains a (meth)acrylic polymer. Examples of the (meth)acrylic polymer include an acrylic polymer containing a monomer unit derived from an acrylic acid derivative such as acrylic acid or an acrylic acid ester, a methacrylic polymer containing a monomer unit derived from a methacrylic acid derivative such as methacrylic acid or a methacrylic acid ester, an acrylic copolymer containing a monomer unit derived from acrylic acid or an acrylic acid derivative, and a methacrylic copolymer containing a monomer unit derived from methacrylic acid or a methacrylic acid derivative. The acrylic copolymer and the methacrylic copolymer may each be a copolymer of acrylic acid or an acrylic acid derivative, and methacrylic acid or a methacrylic acid derivative.

The (meth)acrylic polymer contains a monomer unit derived from an alkyl (meth)acrylate having an alkyl group having 1 to 4 carbon atoms in an amount of more than 50 mass%, and may be a (meth)acrylic homopolymer, or may be a (meth)acrylic copolymer containing a monomer unit derived from an alkyl (meth)acrylate having an alkyl group having 1 to 4 carbon atoms in an amount of more than 50 mass%. The (meth)acrylic resin (A) may contain one kind of (meth)acrylic polymer alone, or may contain a mixture of two or more kinds of (meth)acrylic polymers.

In one aspect, the (meth)acrylic resin (A) contains a methacrylic copolymer containing a monomer unit derived from an alkyl methacrylate having an alkyl group having 1 to 4 carbon atoms and a monomer unit derived from a vinyl monomer copolymerizable with a monomer derived from an alkyl methacrylate having an alkyl group having 1 to 4 carbon atoms. The vinyl monomer is a monomer different from the monomer derived from the alkyl methacrylate having an alkyl group having 1 to 4 carbon atoms.

A content of the monomer unit derived from the alkyl methacrylate is preferably 85.0 mass% or more and less than 100 mass%, more preferably 90.0 mass% or more and 99.5 mass% or less, and still more preferably 92.0 mass% or more and 99.0 mass% or less, based on the total mass of the methacrylic copolymer. A content of the monomer unit derived from the vinyl monomer is preferably more than 0 mass% and 15.0 mass% or less, more preferably 0.5 mass% or more and 10.0 mass% or less, and still more preferably 1.0 mass% or more and 8.0 mass% or less, based on the total mass of the methacrylic copolymer.

The "alkyl methacrylate having an alkyl group having 1 to 4 carbon atoms" is a compound represented by CH₂=CH(CH₃)COOR (R represents an alkyl group having 1 to 4 carbon atoms). The vinyl monomer copolymerizable with the monomer unit derived from the alkyl methacrylate having an alkyl group having 1 to 4 carbon atoms is a monomer that is copolymerizable with the alkyl methacrylate having an alkyl group having 1 to 4 carbon atoms and has a vinyl group.

Examples of the alkyl methacrylate having an alkyl group having 1 to 4 carbon atoms include methyl methacrylate, ethyl methacrylate, n-propyl methacrylate, isopropyl methacrylate, n-butyl methacrylate, tert-butyl methacrylate, sec-butyl methacrylate, and isobutyl methacrylate. The alkyl methacrylate having an alkyl group having 1 to 4 carbon atoms is preferably methyl methacrylate.

Examples of the vinyl monomer copolymerizable with the monomer unit derived from the alkyl methacrylate having an alkyl group having 1 to 4 carbon atoms include: (meth)acrylic acids such as acrylic acid and methacrylic acid; (meth)acrylic acid esters such as methyl acrylate, ethyl acrylate, propyl acrylate, butyl acrylate, cyclohexyl (meth)acrylate, benzyl (meth)acrylate, 2-ethylhexyl (meth)acrylate, 2-hydroxyethyl (meth)acrylate, 2-hydroxypropyl (meth)acrylate, and monoglycerol (meth)acrylate (provided that alkyl methacrylates having an alkyl group having 1 to 4 carbon atoms are excluded); nitrogen-containing monomers such as (meth)acrylamide, (meth)acrylonitrile, diacetone acrylamide, and dimethylaminoethyl (meth)acrylate; epoxy group-containing monomers such as allyl glycidyl ether and glycidyl (meth)acrylate; styrenic monomers such as styrene and α-methylstyrene; and other monomers such as maleic acid, itaconic acid, maleic anhydride, and itaconic anhydride. The vinyl monomer is preferably methyl acrylate, ethyl acrylate, or methacrylic acid, and more preferably methyl acrylate or methacrylic acid.

The (meth)acrylic polymer is obtained by polymerizing a monomer derived from an alkyl (meth)acrylate having an alkyl group having 1 to 4 carbon atoms and, optionally, a vinyl monomer copolymerizable with the monomer derived from the alkyl (meth)acrylate having an alkyl group having 1 to 4 carbon atoms by a method such as bulk polymerization, solution polymerization, suspension polymerization, or emulsion polymerization.

The stereoregularity of the (meth)acrylic polymer is not particularly limited. For example, the (meth)acrylic polymer may be an atactic (meth)acrylic polymer, may be a syndiotactic (meth)acrylic polymer, or may be an isotactic (meth)acrylic polymer. From the viewpoint of improving heat resistance, the (meth)acrylic polymer is preferably a syndiotactic (meth)acrylic polymer.

In the syndiotactic (meth)acrylic polymer, a proportion of triads (also referred to as Triad) composed of three monomer units that are syndiotactic (also referred to as rr) (hereinafter referred to as "syndiotacticity") is preferably 60% or more, more preferably 70% or more, and still more preferably 80% or more. In the syndiotactic (meth)acrylic polymer, the syndiotacticity may be 100% or less.

The polymerization for obtaining the (meth)acrylic polymer can be performed, for example, in the presence of a radical initiator. Examples of the radical initiator include, but are not limited to, azo compounds such as azobisisobutyronitrile, azobisdimethylvaleronitrile, azobiscyclohexanenitrile, 1,1'-azobis(1-acetoxy-1-phenylethane), dimethyl 2,2'-azobisisobutyrate, and 4,4'-azobis-4-cyanovaleric acid; organic peroxides such as benzoyl peroxide, lauroyl peroxide, acetyl peroxide, caprylyl peroxide, 2,4-dichlorobenzoyl peroxide, isobutyl peroxide, acetylcyclohexylsulfonyl peroxide, tert-butyl peroxypivalate, tert-butyl peroxyneodecanoate, tert-butyl peroxyneoheptanoate, tert-butyl peroxy-2-ethylhexanoate, 1,1-di(tert-butylperoxy)cyclohexane, 1,1-di(tert-butylperoxy)-3,3,5-trimethylcyclohexane, 1,1-di(tert-hexylperoxy)-3,3,5-trimethylcyclohexane, diisopropyl peroxydicarbonate, diisobutyl peroxydicarbonate, di-sec-butyl peroxydicarbonate, di-n-butyl peroxydicarbonate, bis(2-ethylhexyl)peroxydicarbonate, bis(4-tert-butylcyclohexyl)peroxydicarbonate, tert-amyl peroxy-2-ethylhexanoate, 1,1,3,3-tetramethylbutyl peroxy-ethylhexanoate, 1,1,2-trimethylpropyl peroxy-2-ethylhexanoate, tert-butyl peroxyisopropylmonocarbonate, tert-amyl peroxyisopropylmonocarbonate, tert-butyl peroxy-2-ethylhexylcarbonate, tert-butyl peroxyallylcarbonate, tert-butyl peroxyisopropylcarbonate, 1,1,3,3-tetramethylbutyl peroxyisopropylmonocarbonate, 1,1,2-trimethylpropyl peroxyisopropylmonocarbonate, 1,1,3,3-tetramethylbutyl peroxyisononanate, 1,1,2-trimethylpropyl peroxy-isononanate, and tert-butyl peroxybenzoate; and any combination of two or more thereof.

The polymerization for obtaining the (meth)acrylic polymer may be performed, as necessary, in the presence of a chain transfer agent. Examples of the chain transfer agent include, but are not limited to, alkyl mercaptans such as n-propyl mercaptan, isopropyl mercaptan, n-butyl mercaptan, tert-butyl mercaptan, n-hexyl mercaptan, n-octyl mercaptan, 2-ethylhexyl mercaptan, n-dodecyl mercaptan, and tert-dodecyl mercaptan; aromatic mercaptans such as phenyl mercaptan and thiocresol; mercaptans having 18 or fewer carbon atoms such as ethylene thioglycol; polyhydric alcohols such as ethylene glycol, neopentyl glycol, trimethylolpropane, pentaerythritol, dipentaerythritol, tripentaerythritol, and sorbitol; compounds obtained by esterifying hydroxyl groups with thioglycolic acid or 3-mercaptopropionic acid; 1,4-dihydronaphthalene, 1,4,5,8-tetrahydronaphthalene, β-terpinene, terpinolene, 1,4-cyclohexadiene, hydrogen sulfide; and any combination of two or more thereof.

When the (meth)acrylic resin (A) is a methacrylic copolymer containing a monomer unit derived from an alkyl methacrylate having an alkyl group having 1 to 4 carbon atoms and a monomer unit derived from a vinyl monomer copolymerizable with a monomer derived from the alkyl methacrylate having an alkyl group having 1 to 4 carbon atoms, it is possible to prevent thermal decomposition of the resin composition when the resin composition according to the first embodiment is extruded using an extruder.

A content of the (meth)acrylic resin (A) is 75 parts by mass or more and less than 95 parts by mass, preferably 76 parts by mass or more and 93 parts by mass or less, and more preferably 80 parts by mass or more and 90 parts by mass or less, based on 100 parts by mass of the resin composition. When two or more kinds of the (meth)acrylic resin (A) are contained, the content is the total content of the (meth)acrylic resin (A).

The polyethylene oxide (B) is obtained by polymerizing ethylene oxide. In the present specification, the polyethylene oxide (B) has the same chemical structure as polyethylene glycol, and is used synonymously with polyethylene glycol.

A reduced viscosity (I) represented by the following Formula (1) of the polyethylene oxide (B) is 2.00 dL/g or more, preferably 2.50 dL/g or more, and more preferably 2.70 dL/g or more, from the viewpoint of improving chipping resistance. The reduced viscosity (I) represented by the following Formula (1) of the polyethylene oxide (B) is 25.00 dL/g or less, preferably 20.00 dL/g or less, and more preferably 18.00 dL/g or less, from the viewpoint of obtaining high transparency. The reduced viscosity (I) represented by the following Formula (1) of the polyethylene oxide (B) is 2.00 dL/g or more and 25.00 dL/g or less, and in one aspect, is preferably 2.50 dL/g or more and 20.00 dL/g or less, and more preferably 2.70 dL/g or more and 18.00 dL/g or less.$I = \left(η-{η}_{0}\right) / \left({cη}_{0}\right)$ (1)

In Formula (1), η₀ represents a viscosity (Pa·s) of chloroform at 23°C as measured in accordance with JIS Z8803. η represents a viscosity (Pa·s) of a chloroform solution of the polyethylene oxide (B) having a concentration of 0.01 g/dL at 23°C as measured in accordance with JIS Z8803. c represents a concentration (0.01 g/dL) of the polyethylene oxide (B).

The reduced viscosity (I) represented by Formula (1) of the polyethylene oxide (B) can be reduced, for example, by reducing a content of ethylene oxide when the polyethylene oxide (B) is polymerized by reacting ethylene oxide with ethylene glycol using an alkali metal alcoholate or the like as a catalyst.

A content of the polyethylene oxide (B) is more than 5 parts by mass and 25 parts by mass or less, preferably 7 parts by mass or more and 24 parts by mass or less, and more preferably 10 parts by mass or more and 20 parts by mass or less, based on 100 parts by mass of the resin composition.

The resin composition according to the first embodiment may contain, in addition to the (meth)acrylic resin (A) and the polyethylene oxide (B), other polymers, additives, and the like, as necessary. Examples of the other polymers include high-density polyethylene, fossil fuel-derived linear low-density polyethylene, fossil fuel-derived high-pressure low-density polyethylene, polypropylene resin, and elastomers. Examples of the additives include an antioxidant, an ultraviolet absorber, an antiblocking agent, a lubricant, an antistatic agent, a dispersant, a processability improver, and a flame retardant.

### <Second Invention>

Hereinafter, an embodiment of a resin composition according to a second invention (hereinafter, referred to as a second embodiment) will be described. In the description of the second embodiment, only differences from the first embodiment will be described.

The resin composition according to the second embodiment contains a (meth)acrylic resin (A) and polyethylene oxide (B), in which a content of the (meth)acrylic resin (A) is 95 parts by mass or more and less than 97.5 parts by mass based on 100 parts by mass of the resin composition, and a content of the polyethylene oxide (B) is more than 2.5 parts by mass and 5 parts by mass or less based on 100 parts by mass of the resin composition.

The (meth)acrylic resin (A) is a methacrylic copolymer containing a monomer unit derived from an alkyl methacrylate having an alkyl group having 1 to 4 carbon atoms and a monomer unit derived from methacrylic acid.

A content of the monomer unit derived from the alkyl methacrylate is preferably 85.0 mass% or more and less than 100 mass%, more preferably 90.0 mass% or more and 99.5 mass% or less, and still more preferably 92.0 mass% or more and 99.0 mass% or less, based on the total mass of the methacrylic copolymer. A content of the monomer unit derived from the methacrylic acid is preferably more than 0 mass% and 15.0 mass% or less, more preferably 0.5 mass% or more and 10.0 mass% or less, and still more preferably 1.0 mass% or more and 8.0 mass% or less, based on the total mass of the methacrylic copolymer.

A content of the (meth)acrylic resin (A) is 95 parts by mass or more and less than 97.5 parts by mass, and preferably 95.5 parts by mass or more and 97 parts by mass or less, based on 100 parts by mass of the resin composition.

A content of the polyethylene oxide (B) is more than 2.5 parts by mass and 5 parts by mass or less, and preferably 3 parts by mass or more and 4.5 parts by mass or less, based on 100 parts by mass of the resin composition.

### [Method for Producing Resin Composition]

A method for producing a resin composition according to the present embodiment is a method for producing the above-described resin composition, and includes a kneading step of melt-kneading the (meth)acrylic resin (A) and the polyethylene oxide (B) with an extruder. More specifically, the method for producing a resin composition includes, for example, a kneading step of melt-kneading the (meth)acrylic resin (A), the polyethylene oxide (B), and other components optionally blended, by a known method. Examples of the known melt-kneading method include a method in which the (meth)acrylic resin (A) and the polyethylene oxide (B) are fed from different feeders and melt-kneaded with a single-screw extruder, a twin-screw extruder, or another multi-screw extruder, or a method of melt-kneading with a kneader, a Banbury mixer, or the like. In the method for producing a resin composition according to the present embodiment, the kneading step is preferably performed by a single-screw extruder or a twin-screw extruder (hereinafter, simply referred to as an "extruder").

In the method for producing a resin composition according to the present embodiment, the extruder includes a cylinder. The extruder may further include a plurality of feeders for supplying raw materials to feed ports of the cylinder. That is, the raw materials, i.e., the (meth)acrylic resin (A) and the polyethylene oxide (B), may be introduced into the inside of the cylinder through the plurality of feeders. Among the plurality of feeders, a feed port of the feeder for the (meth)acrylic resin (A) is preferably disposed at the same position as a feed port of the feeder for the polyethylene oxide (B), or at a position downstream from the feed port of the feeder for the polyethylene oxide (B).

A heater set temperature of the cylinder located closest to a portion where the polyethylene oxide (B) is fed and positioned downstream from the portion is 110°C or higher and 150°C or lower, preferably 115°C or higher and 145°C or lower, and more preferably 120°C or higher and 140°C or lower. The cylinder may have a plurality of heaters. The plurality of heaters may each be set to a different temperature. That is, a set temperature of the cylinder may be adjusted by the set temperatures of the plurality of heaters. Even when a size of the extruder is changed, the heater set temperature is substantially equal to a temperature of the portion where feeding is performed.

The cylinder may include, inside the cylinder, a screw extending in an axial direction of the cylinder. As the screw rotates, the resin composition is conveyed from an inlet of the cylinder to an outlet of the cylinder while being kneaded. A screw rotation speed of the screw is preferably 100 rpm or more and 300 rpm or less, and more preferably 150 rpm or more and 250 rpm or less.

### [Method for Producing Resin Composition Pellets]

A method for producing resin composition pellets according to the present embodiment includes a pelletizing step of extruding the above-described resin composition with an extruder to obtain resin composition pellets. More specifically, in the method for producing resin composition pellets, the above-described resin composition may be extruded through a die hole of an extruder to form a strand. In addition, the obtained strand may also be guided into a cooling water tank and cooled. Furthermore, resin composition pellets may be obtained by cutting the cooled strand with a strand cutter.

### [Molded article]

A molded article according to the present embodiment contains the above-described resin composition. A molded article can be molded by a known molding method such as extrusion molding, calendar molding, or injection molding using a conventional apparatus used for molding a resin. The molded article is preferably molded by injection molding. Examples of the injection molding include a general injection molding method, an injection foaming molding method, a supercritical injection foaming molding method, an ultra-high-speed injection molding method, an injection compression molding method, a gas-assist injection molding method, a sandwich molding method, a sandwich foaming molding method, and an insert-outsert molding method. The shape of the injection-molded article is not particularly limited.

The molded article according to the present embodiment has high transparency and chipping resistance, and also has excellent productivity, and therefore can be suitably used for, for example, vehicle exterior materials such as vehicle lamp covers, visors, and front grilles; vehicle interior materials such as meter covers and front plates of onboard displays; building materials such as windows and sound barriers; signboards; furniture such as tabletops; display shelves; exteriors such as carports; front plates of displays; and lighting fixture members such as covers and globes. Examples of the vehicle lamp covers include covers for a headlamp, a taillamp, a stop lamp, a turn signal lamp, a fog lamp, a clearance lamp, and a backup lamp.

### [Method for Decomposing and Recovering Resin Composition]

A method for decomposing and recovering a resin composition according to the present embodiment includes: a decomposition step of decomposing the above-described resin composition at a temperature of 380°C or higher; a separation step of separating a volatile component and a solid material generated by the decomposition; and a recovery step of recovering a (meth)acrylic acid ester from the volatile component. The (meth)acrylic acid ester is derived from "alkyl (meth)acrylate having an alkyl group having 1 to 4 carbon atoms" contained in "(meth)acrylic resin (A)", which is a component of the resin composition.

More specifically, in the decomposition step, the resin composition is decomposed to obtain a reaction product containing a (meth)acrylic acid ester. The decomposition of the resin composition in the decomposition step is performed by heating. A temperature at which the decomposition step is performed is 380°C or higher, preferably 390°C or higher, and more preferably 400°C or higher. A pyrolysis apparatus may be used in the decomposition step. Examples of the pyrolysis apparatus include one or more heated extruders, heated rotary kilns, heated vessel-type reactors, fixed-bed reactors, bubbling fluidized bed reactors, internal circulating fluidized bed reactors, circulating fluidized bed reactors, apparatuses that decompose plastic by allowing the plastic to flow down along an inner wall of a heated vessel, and microwave heating apparatuses.

More specifically, in the separation step, a volatile component and a solid material contained in a reaction product containing a (meth)acrylic acid ester generated in the decomposition step are separated. The pyrolysis apparatus may include an apparatus for separating the volatile component and the solid material.

The recovery step may be performed by separating and purifying the reaction product, through purification, into a plurality of products having different boiling points.

The method for decomposing and recovering a resin composition according to the present embodiment can contribute to reducing environmental burden by being performed in the above aspect.

### [Method for Producing Recycled Material]

A method for producing a recycled material according to the present embodiment includes a step of melt-kneading a raw material containing a crushed material obtained by crushing the above-described molded article.

A content of the crushed material is 0.01 parts by mass or more and 99.99 parts by mass or less, and preferably 1.00 part by mass or more and 99.00 parts by mass or less, based on 100 parts by mass of the raw material.

The raw material may contain a virgin (meth)acrylic resin in addition to the crushed material.

In one aspect, the step includes a step of melt-kneading the crushed material and the virgin (meth)acrylic resin. The virgin (meth)acrylic resin means a (meth)acrylic polymer that, after production of the (meth)acrylic polymer by a process including a polymerization step, has not been molded into a product such as an automobile or a part thereof, and has not been used for any final use.

The step is performed by, for example, a method of melt-kneading with a single screw extruder, a twin screw extruder, or another multi-screw extruder, or a method of melt-kneading with a kneader, a Banbury mixer, or the like.

The step may be performed at 110°C or higher and 290°C or lower, and is preferably performed at 130°C or higher and 270°C or lower.

The method for producing a recycled material according to the present embodiment can contribute to reducing environmental burden while reusing the (meth)acrylic resin, by being performed in the above aspect.

The present invention includes the following aspects.
[1] A resin composition containing a (meth)acrylic resin (A) and polyethylene oxide (B),
   in which
   a content of the (meth)acrylic resin (A) is 75 parts by mass or more and less than 95 parts by mass based on 100 parts by mass of the resin composition,
   a content of the polyethylene oxide (B) is more than 5 parts by mass and 25 parts by mass or less based on 100 parts by mass of the resin composition, and
   a reduced viscosity (I) of the polyethylene oxide (B) represented by Formula (1) below is 2.00 dL/g or more and 25.00 dL/g or less: $I = \left(η-{η}_{0}\right) / \left({cη}_{0}\right)$ (1)
   in the formula,
      η₀ represents a viscosity (Pa·s) of chloroform at 23°C as measured in accordance with JIS Z8803,
      η represents a viscosity (Pa·s) of a chloroform solution of the polyethylene oxide (B) at 23°C as measured in accordance with JIS Z8803, the solution having a concentration of 0.01 g/dL, and
      c represents the concentration (0.01 g/dL) of the polyethylene oxide (B).
[2] The resin composition according to [1], in which a content of the polyethylene oxide (B) is 7 parts by mass or more and 24 parts by mass or less based on 100 parts by mass of the resin composition.
[3] The resin composition according to [1] or [2], in which the reduced viscosity (I) of the polyethylene oxide (B) is 2.50 dL/g or more and 20.00 dL/g or less.
[4] The resin composition according to any one of [1] to [3], in which
   the (meth)acrylic resin (A) contains a methacrylic copolymer containing:
      a monomer unit derived from an alkyl methacrylate having an alkyl group having 1 to 4 carbon atoms, and
      a monomer unit derived from a vinyl monomer copolymerizable with the monomer unit derived from the alkyl methacrylate having an alkyl group having 1 to 4 carbon atoms,
   a content of the monomer unit derived from the alkyl methacrylate is 85.0 mass% or more and less than 100 mass% based on a total mass of the methacrylic copolymer, and
   a content of the monomer unit derived from the vinyl monomer is more than 0 mass% and 15.0 mass% or less based on the total mass of the methacrylic copolymer.
[5] The resin composition according to [4], in which the alkyl methacrylate is methyl methacrylate.
[6] The resin composition according to [4], in which the vinyl monomer is methacrylic acid.
[7] The resin composition according to [5], in which the vinyl monomer is methacrylic acid.
[8] A resin composition containing a (meth)acrylic resin (A) and polyethylene oxide (B),
   in which
   a content of the (meth)acrylic resin (A) is 95 parts by mass or more and less than 97.5 parts by mass based on 100 parts by mass of the resin composition,
   a content of the polyethylene oxide (B) is more than 2.5 parts by mass and 5 parts by mass or less based on 100 parts by mass of the resin composition,
   the (meth)acrylic resin (A) is a methacrylic copolymer containing:
      a monomer unit derived from an alkyl methacrylate having an alkyl group having 1 to 4 carbon atoms, and
      a monomer unit derived from methacrylic acid, and
   a reduced viscosity (I) of the polyethylene oxide (B) represented by Formula (1) below is 2.00 dL/g or more and 25.00 dL/g or less: $I = \left(η-{η}_{0}\right) / \left({cη}_{0}\right)$ (1)
   in the formula,
      η₀ represents a viscosity (Pa·s) of chloroform at 23°C as measured in accordance with JIS Z8803,
      η represents a viscosity (Pa·s) of a chloroform solution of the polyethylene oxide (B) at 23°C as measured in accordance with JIS Z8803, the solution having a concentration of 0.01 g/dL, and
      c represents the concentration (0.01 g/dL) of the polyethylene oxide (B).
[9] A molded article containing the resin composition according to any one of [1] to [8].
[10] The molded article according to [9], which is used as a vehicle exterior material.
[11] A method for producing resin composition pellets, the method including a pelletizing step of extruding the resin composition according to any one of [1] to [8] using an extruder to obtain resin composition pellets.
[12] A method for producing the resin composition according to any one of [1] to [8], the method including:
   a kneading step of melt-kneading the (meth)acrylic resin (A) and the polyethylene oxide (B) with an extruder,
   in which
   the extruder includes a cylinder, and
   a heater set temperature of the cylinder located closest to a portion where the polyethylene oxide (B) is fed and positioned downstream from the portion is 110°C or higher and 150°C or lower.
[13] A method for decomposing and recovering a resin composition, the method including:
   a decomposition step of decomposing the resin composition according to any one of [1] to [8] at a temperature of 380°C or higher;
   a separation step of separating a volatile component and a solid material generated by the decomposition step; and
   a recovery step of recovering a (meth)acrylic acid ester from the volatile component.
[14] A method for producing a recycled material, the method including:
   a step of melt-kneading a raw material containing a crushed material obtained by crushing the molded article according to [9],
   in which a content of the crushed material is 0.01 parts by mass or more and 99.99 parts by mass or less based on 100 parts by mass of the raw material.
[15] A method for producing a recycled material, the method including:
   a step of melt-kneading a raw material containing a crushed material obtained by crushing the molded article according to [10],
   in which a content of the crushed material is 0.01 parts by mass or more and 99.99 parts by mass or less based on 100 parts by mass of the raw material.

It should be noted that the resin composition, the molded article, the method for producing resin composition pellets, the method for producing a resin composition, the method for decomposing and recovering a resin composition, and the method for producing a recycled material according to the present embodiment are not limited to the above embodiment, and various modifications can be made without departing from the gist of the present invention. In addition, configurations, methods, and the like of embodiments other than those described above may be optionally adopted and combined, and configurations, methods, and the like according to one of the above embodiments may be applied to configurations, methods, and the like according to another of the above embodiments.

### EXAMPLES

Hereinafter, the present invention will be described more specifically with reference to Examples. The present invention is not limited to the Examples.

Table 1 shows polyethylene oxide (polyethylene glycol), which is the component (B), used in the Examples and Comparative Examples.

**[Table 1]**

| Name | Reduced viscosity (I) [dL/g] | Molecular weight (Manufacturer's reference value) | Manufacturer |
|---|---|---|---|
| PEO-1 | 2.98 | Viscosity average molecular weight: 150,000 to 400,000 | Sumitomo Seika Chemicals Company, Limited |
| PEO-2 | 5.28 | Viscosity average molecular weight: 400,000 to 600,000 | Sumitomo Seika Chemicals Company, Limited |
| PEO-3 | 7.48 | Viscosity average molecular weight: 600,000 to 1,100,000 | Sumitomo Seika Chemicals Company, Limited |
| PEO-8 | 16.20 | Viscosity average molecular weight: 1,700,000 to 2,200,000 | Sumitomo Seika Chemicals Company, Limited |
| PEO-15 | 31.24 | Viscosity average molecular weight: 3,300,000 to 3,800,000 | Sumitomo Seika Chemicals Company, Limited |
| PEG35k | 0.71 | Number average molecular weight: 35,000 | Merck |
| PEG20k | 0.41 | Number average molecular weight: 20,000 | Merck |
| PEG4k | 0.06 | Average molecular weight: 2,700 to 3,300 | FUJIFILM Wako Pure Chemical Corporation |

The reduced viscosity (I) (unit: dL/g) of polyethylene oxide (B) was calculated according to the following Formula (1).$I = \left(η-{η}_{0}\right) / \left({cη}_{0}\right)$ (1)

In Formula (1), η₀ represents a viscosity (Pa·s) of chloroform at 23°C as measured in accordance with JIS Z8803. η represents a viscosity (Pa·s) of a chloroform solution of polyethylene oxide (B) having a concentration of 0.01 g/dL at 23°C as measured in accordance with JIS Z8803. c represents a concentration (0.01 g/dL) of polyethylene oxide (B).

### [(Meth)acrylic Resin (A)]

### <(Meth)acrylic Resin (A1)>

A mixture of 97.5 parts by mass of methyl methacrylate and 2.5 parts by mass of methyl acrylate, 0.016 parts by mass of 1,1-di(tert-butylperoxy)cyclohexane, and 0.16 parts by mass of n-octyl mercaptan were each continuously supplied to a polymerization reactor equipped with a stirrer, and a polymerization reaction was performed at 175°C with an average residence time of 43 minutes.

Next, after the reaction liquid (partially polymerized product) discharged from the polymerization reactor was preheated, the reaction liquid was supplied to a devolatilizing extruder, and unreacted monomer components were vaporized and recovered, thereby obtaining a pelletized (meth)acrylic resin (A1).

In the obtained (meth)acrylic resin (A1), a content of the monomer unit derived from methyl methacrylate was 97.5 mass%, a content of the monomer unit derived from methyl acrylate was 2.5 mass%, and a melt flow rate (MFR) measured in accordance with JIS K7210 was 2 g/10 min.

### <(Meth)acrylic Resin (A2)>

Methacrylic acid-methyl methacrylate copolymer (containing 4 mass% of methacrylic acid, "ALTUGLUS HT121" manufactured by Trinseo)

### <(Meth)acrylic Resin (A3)>

Syndiotactic methyl methacrylate polymer (high syndiotacticity, "PARAPET (registered trademark) SP-01" manufactured by Kuraray Co., Ltd.)

### (Example 1)

### <Production of Resin Composition (Melt-Kneading)>

90 parts by mass of the (meth)acrylic resin (A1) produced as described above and 10 parts by mass of PEO-1 were melt-kneaded using a twin-screw extruder (model: TEX30SS-30AW-2V, manufactured by The Japan Steel Works, Ltd.) under the following kneading conditions, extruded into a strand form, solidified by water cooling, and cut with a strand cutter, thereby obtaining a pelletized resin composition. Table 2 shows the contents of the (meth)acrylic resin (A1) and the polyethylene oxide (B).

### <Conditions for Melt-Kneading>

With respect to the temperature of the extruder, eight heaters arranged apart from one another between the raw material feed port and the outlet were set, from the raw material feed port side, to 130°C, 180°C, 200°C, 230°C, 240°C, 250°C, 255°C, and 250°C, respectively. The screw rotation speed was set to 200 rpm. The raw material (meth)acrylic resin (A1) was fed by a pellet feeder, and PEO-1 was fed by a powder feeder. Based on the mixing ratio of the (meth)acrylic resin (A1) and PEO-1, each feed rate was set as follows so that the total feed rate of the raw materials was 14.0 kg/h.
Feed rate of (meth)acrylic resin (A1): 12.6 kg/h
Feed rate of PEO-1: 1.4 kg/h

### <Evaluation of Productivity of Resin Composition>

The productivity of the resin composition was evaluated based on whether polyethylene oxide (B) could be fed from the powder feeder at the set rate during melt-kneading. Table 2 shows the results obtained according to the following evaluation criteria.

### <<Evaluation Criteria>>

O: Feeding could be performed at the set rate without any problem.
×: At the set rate, polyethylene oxide slipped and could not be fed.
-: Evaluation could not be made because polyethylene oxide was not used.

### <Production of Molded article (Injection Molding)>

Using an injection molding machine (EC130SXII-4A, manufactured by Toshiba Machine Co., Ltd.), the obtained pelletized resin composition was molded into a flat plate having a length of 150 mm, a width of 90 mm, and a thickness of 3.0 mm under the following molding conditions, thereby obtaining a molded article.

### <Conditions for Injection Molding>

With respect to the temperature in the cylinder, five heaters arranged apart from one another between the raw material feed port and the outlet were set, from the raw material feed port side, to 60°C, 230°C, 240°C, 250°C, and 250°C, respectively. Other molding conditions were as follows.
Injection speed: 90 mm/sec
Maximum injection pressure: 200 MPa
Holding pressure: 80 MPa
Mold temperature: 60°C
Cooling time: 45 seconds

The obtained molded article was cut into a size of 75 mm × 90 mm × 3 mm to prepare a test specimen, and transparency and chipping resistance were evaluated using the test specimen.

### <Measurement of Transparency of Molded article>

The transparency of the molded article was evaluated by measuring a diffused transmittance (Td) (unit: %) of the molded article according to the following Formula (2). When Td is 2.0% or less, it can be said that transparency is good. $Td = Haze \times Tt$ (2)

In the formula,
Haze represents haze (unit: %) of a molded article having a thickness of 3 mm, as measured at 23°C in accordance with JIS K7136.

Tt represents total light transmittance (unit: %) of a molded article having a thickness of 3 mm, as measured at 23°C in accordance with JIS K7361-1.

### <Measurement of Chipping Resistance of Molded article>

A chipping test was performed using a molded article having a size of 75 mm × 90 mm × 3 mm. The molded article was placed such that the center of gravity of the molded article was positioned directly below an injection nozzle (inner diameter: 6 mm), and adjusted so that a distance between the injection nozzle and the molded article was 370 mm. Next, air was ejected from the injection nozzle at a pressure of 1 kg/cm². 5 g of No. 8 silica sand manufactured by TOHOKU KEISYA Co., Ltd. was supplied to the injection nozzle, and was injected toward the molded article directly below on a flow of air.

The chipping resistance of the molded article was evaluated by measuring a value (ΔTd) (unit: %) obtained by subtracting the diffused transmittance of the molded article before the chipping test from the diffused transmittance of the molded article after the chipping test. When ΔTd is less than 20.0%, it can be said that chipping resistance is good.

### [Examples 2 to 8]

Molded bodies were produced in the same manner as in Example 1, except that the content of the (meth)acrylic resin (A1) and the type and content of the polyethylene oxide (B) were changed as shown in Table 2, and transparency, chipping resistance, and productivity of the resin composition were evaluated. The results are shown in Table 2.

### [Comparative Example 1]

Using the (meth)acrylic resin (A1), a molded article was produced by injection molding in the same manner as in Example 1, and transparency and chipping resistance were evaluated. The results are shown in Table 2.

### [Comparative Examples 2 to 15]

Molded bodies were produced in the same manner as in Example 1, except that the content of the (meth)acrylic resin (A1) and the type and content of the polyethylene oxide (B) were changed as shown in Table 2, and transparency, chipping resistance, and productivity of the resin composition were evaluated. The results are shown in Table 2.

**[Table 2]**

| Example | Content of (meth)acrylic resin (A1) [parts by mass] | Polyethylene oxide (B) | | Transparency (Td) [%] | Chipping resistance (ΔTd) [%] | Productivity |
|---|---|---|---|---|---|---|
| | | Type | Content [parts by mass] | | | |
| Example 1 | 90 | PEO-1 | 10 | 1.2 | 19.3 | ○ |
| Example 2 | 87 | PEO-2 | 13 | 1.2 | 18.0 | ○ |
| Example 3 | 87 | PEO-3 | 13 | 1.1 | 19.2 | ○ |
| Example 4 | 78 | PEO-1 | 22 | 2.0 | 16.6 | ○ |
| Example 5 | 77 | PEO-2 | 23 | 1.9 | 17.0 | ○ |
| Example 6 | 76 | PEO-3 | 24 | 1.6 | 15.9 | ○ |
| Example 7 | 93 | PEO-8 | 7 | 0.9 | 19.8 | ○ |
| Example 8 | 79 | PEO-8 | 21 | 1.8 | 17.4 | ○ |
| Comparative Example 1 | 100 | - | 0 | 0.3 | 20.4 | - |
| Comparative Example 2 | 96 | PEO-1 | 4 | 0.9 | 20.4 | ○ |
| Comparative Example 3 | 95 | PEO-2 | 5 | 0.7 | 21.4 | ○ |
| Comparative Example 4 | 95 | PEO-3 | 5 | 0.6 | 20.3 | ○ |
| Comparative Example 5 | 94 | PEO-15 | 6 | 2.7 | 19.5 | ○ |
| Comparative Example 6 | 84 | PEO-15 | 16 | 6.9 | 15.9 | ○ |
| Comparative Example 7 | 97 | PEG 35k | 3 | 0.4 | 21.4 | ○ |
| Comparative Example 8 | 97 | PEG 20k | 3 | 0.4 | 21.5 | ○ |
| Comparative Example 9 | 87 | PEG 35k | 13 | - | - | × |
| Comparative Example 10 | 87 | PEG 20k | 13 | - | - | × |
| Comparative Example 11 | 95 | PEG 35k | 5 | 0.4 | 21.4 | ○ |
| Comparative Example 12 | 95 | PEG 20k | 5 | 0.3 | 20.9 | ○ |
| Comparative Example 13 | 97 | PEG 4k | 3 | 0.3 | 22.8 | ○ |
| Comparative Example 14 | 95 | PEG 4k | 5 | 0.4 | 22.3 | ○ |
| Comparative Example 15 | 87 | PEG 4k | 13 | - | - | × |

As is apparent from the results in Table 2, the molded bodies of Examples 1 to 8, which satisfy all of the constituent requirements of the present invention, all exhibited good results in both transparency and chipping resistance. On the other hand, the molded bodies of Comparative Examples 5 and 6 failed to achieve sufficient transparency. In addition, the molded bodies of Comparative Examples 1 to 4, 7, 8, and 11 to 14 failed to achieve sufficient chipping resistance. It should be noted that, in the molded bodies of Comparative Examples 9, 10, and 15, polyethylene oxide (B) could not be fed and melt-kneading could not be performed, and therefore transparency and chipping resistance could not be evaluated.

### [Examples 9 to 12]

Using (meth)acrylic resin (A2) as the (meth)acrylic resin (A), molded bodies were produced in the same manner as in Example 1, except that the content of the (meth)acrylic resin (A2) and the type and content of the polyethylene oxide (B) were changed as shown in Table 3, and transparency, chipping resistance, and productivity of the resin composition were evaluated. The results are shown in Table 3.

**[Table 3]**

| Example | Content of (meth)acrylic resin (A2) [parts by mass] | Polyethylene oxide (B) | | Transparency (Td) [%] | Chipping resistance (ΔTd) [%] | Productivity |
|---|---|---|---|---|---|---|
| | | Type | Content [parts by mass] | | | |
| Example 9 | 96 | PEO-3 | 4 | 0.8 | 18.6 | ○ |
| Example 10 | 94 | PEO-3 | 6 | 0.6 | 17.7 | ○ |
| Example 11 | 88 | PEO-3 | 12 | 0.8 | 16.4 | ○ |
| Example 12 | 82 | PEO-3 | 18 | 0.7 | 16.9 | ○ |

As is apparent from the results in Table 3, the molded bodies of Examples 9 to 12, which satisfy all of the constituent requirements of the present invention, all exhibited good results in transparency, chipping resistance, and productivity.

### [Example 13]

Using (meth)acrylic resin (A3) as the (meth)acrylic resin (A), molded bodies were produced in the same manner as in Example 1, except that the content of the (meth)acrylic resin (A3) and the type and content of the polyethylene oxide (B) were changed as shown in Table 4, and transparency, chipping resistance, and productivity of the resin composition were evaluated. The results are shown in Table 4.

**[Table 4]**

| Example | Content of (meth)acryli c resin (A3) [parts by mass] | Polyethylene oxide (B) | | Transparency (Td) [%] | Chipping resistance (ΔTd) [%] | Productivity |
|---|---|---|---|---|---|---|
| | | Type | Content [parts by mass] | | | |
| Example 13 | 94 | PEO-3 | 6 | 0.7 | 19.2 | ○ |

As is apparent from the results in Table 4, the molded article of Example 13, which satisfies all of the constituent requirements of the present invention, exhibited good results in transparency, chipping resistance, and productivity.

From the above, it can be seen that, according to the present invention, it is possible to provide a resin composition and a molded article having excellent transparency and chipping resistance, a method for producing resin composition pellets, a method for producing a resin composition, a method for decomposing and recovering a resin composition, and a method for producing a recycled material.

## Claims

1. A resin composition comprising a (meth)acrylic resin (A) and polyethylene oxide (B),
wherein
a content of the (meth)acrylic resin (A) is 75 parts by mass or more and less than 95 parts by mass based on 100 parts by mass of the resin composition,
a content of the polyethylene oxide (B) is more than 5 parts by mass and 25 parts by mass or less based on 100 parts by mass of the resin composition,
a reduced viscosity (I) of the polyethylene oxide (B) represented by Formula (1) below is 2.00 dL/g or more and 25.00 dL/g or less: $I = \left(η-{η}_{0}\right) / \left({cη}_{0}\right)$ (1)
in the formula,
η₀ represents a viscosity (Pa·s) of chloroform at 23°C as measured in accordance with JIS Z8803,
η represents a viscosity (Pa·s) of a chloroform solution of the polyethylene oxide (B) at 23°C as measured in accordance with JIS Z8803, the solution having a concentration of 0.01 g/dL, and
c represents the concentration (0.01 g/dL) of the polyethylene oxide (B).

2. The resin composition according to claim 1,
wherein a content of the polyethylene oxide (B) is 7 parts by mass or more and 24 parts by mass or less based on 100 parts by mass of the resin composition.

3. The resin composition according to claim 1,
wherein the reduced viscosity (I) of the polyethylene oxide (B) is 2.50 dL/g or more and 20.00 dL/g or less.

4. The resin composition according to claim 1,
wherein
the (meth)acrylic resin (A) contains a methacrylic copolymer containing:
a monomer unit derived from an alkyl methacrylate having an alkyl group having 1 to 4 carbon atoms, and
a monomer unit derived from a vinyl monomer copolymerizable with the monomer unit derived from the alkyl methacrylate having an alkyl group having 1 to 4 carbon atoms,
a content of the monomer unit derived from the alkyl methacrylate is 85.0 mass% or more and less than 100 mass% based on a total mass of the methacrylic copolymer, and
a content of the monomer unit derived from the vinyl monomer is more than 0 mass% and 15.0 mass% or less based on the total mass of the methacrylic copolymer.

5. The resin composition according to claim 4, wherein the alkyl methacrylate is methyl methacrylate.

6. The resin composition according to claim 4, wherein the vinyl monomer is methacrylic acid.

7. The resin composition according to claim 5, wherein the vinyl monomer is methacrylic acid.

8. A resin composition comprising a (meth)acrylic resin (A) and polyethylene oxide (B),
wherein
a content of the (meth)acrylic resin (A) is 95 parts by mass or more and less than 97.5 parts by mass based on 100 parts by mass of the resin composition,
a content of the polyethylene oxide (B) is more than 2.5 parts by mass and 5 parts by mass or less based on 100 parts by mass of the resin composition,
the (meth)acrylic resin (A) is a methacrylic copolymer containing:
a monomer unit derived from an alkyl methacrylate having an alkyl group having 1 to 4 carbon atoms, and
a monomer unit derived from methacrylic acid, and
a reduced viscosity (I) of the polyethylene oxide (B) represented by Formula (1) below is 2.00 dL/g or more and 25.00 dL/g or less: $I = \left(η-{η}_{0}\right) / \left({cη}_{0}\right)$ (1)
in the formula,
η₀ represents a viscosity (Pa·s) of chloroform at 23°C as measured in accordance with JIS Z8803,
η represents a viscosity (Pa·s) of a chloroform solution of the polyethylene oxide (B) at 23°C as measured in accordance with JIS Z8803, the solution having a concentration of 0.01 g/dL, and
c represents the concentration (0.01 g/dL) of the polyethylene oxide (B).

9. A molded article comprising the resin composition according to any one of claims 1 to 8.

10. The molded article according to claim 9, which is used as a vehicle exterior material.

11. A method for producing resin composition pellets, the method comprising a pelletizing step of extruding the resin composition according to any one of claims 1 to 8 using an extruder to obtain resin composition pellets.

12. A method for producing the resin composition according to any one of claims 1 to 8, the method comprising:
a kneading step of melt-kneading the (meth)acrylic resin (A) and the polyethylene oxide (B) with an extruder,
wherein
the extruder includes a cylinder, and
a heater set temperature of the cylinder located closest to a portion where the polyethylene oxide (B) is fed and positioned downstream from the portion is 110°C or higher and 150°C or lower.

13. A method for decomposing and recovering a resin composition, the method comprising:
a decomposition step of decomposing the resin composition according to any one of claims 1 to 8 at a temperature of 380°C or higher;
a separation step of separating a volatile component and a solid material generated by the decomposition step; and
a recovery step of recovering a (meth)acrylic acid ester from the volatile component.

14. A method for producing a recycled material, the method comprising:
a step of melt-kneading a raw material containing a crushed material obtained by crushing the molded article according to claim 9,
wherein a content of the crushed material is 0.01 parts by mass or more and 99.99 parts by mass or less based on 100 parts by mass of the raw material.

15. A method for producing a recycled material, the method comprising:
a step of melt-kneading a raw material containing a crushed material obtained by crushing the molded article according to claim 10,
wherein a content of the crushed material is 0.01 parts by mass or more and 99.99 parts by mass or less based on 100 parts by mass of the raw material.
